# EUROPEAN PATENT SPECIFICATION

(11) **EP 1 595 860 B1**
(45) Date of publication and mention of the grant of the patent: **14.11.2018**
(21) Application number: 05103956.8
(22) Date of filing: 11.05.2005
(51) Int. Cl.: C05C 1/02, C05C 3/00, C01C 1/18, C01C 1/24

(54) **PROCESS OF PREPARATION OF GRANULATED AMMONIUM NITRATE-SULPHATE FERTILIZER**
VERFAHREN ZUR HERSTELLUNG EINES KÖRNIGEN AMMONIUM- NITRAT-SULFAT DÜNGEMITTELS
PROCÉDÉ DE PRÉPARATION D'ENGRAIS, SOUS FORME DE GRANULES, À BASE DE NITRATE ET SULFATE D'AMMONIUM

(30) Priority: 13.05.2004 SK 2132004
(43) Date of publication of application: 16.11.2005
(73) Proprietor: Duslo, a.s., 927 03 Sal'a (SK)
(72) Inventor: Bugárová, Zuzana, 925 42, Trstice (SK); Polák, Anton, 925 63, Dolná Streda (SK); Batyka, Dezider, 925 71, Trnovec nad/Váhom (SK); Papp, Jozef, 927 01, a a (SK)
(74) Representative: Bachratá, Magdaléna

(56) References cited:
- WO-A2-02/40427
- BE-A- 388 046
- BE-A- 400 807
- DE-C- 612 708
- GB-A- 328 620
- GB-A- 571 080
- GB-A- 758 170
- GB-A- 893 389
- GB-A- 1 049 782
- GB-A- 1 071 773
- GB-A- 1 259 778
- GB-A- 1 340 884
- ANDRZEJ BISKUPSKI: "An analysis of a possibility of the manufacturing for the fertilizers according to european patent application EP 1595860" DOCUMENT OF THE INSTITUTE OF INORGANIC TECHNOLOGY AND MINERALFERTILIZERS OF ENGINEERING COLLEGE OF WROCLAW, XX, XX, 1 January 2006 (2006-01-01), pages 1-16, XP003000634

## Description

### Technical Field

The invention concerns a process of preparation of granulated ammonium nitrate-sulphate fertilizer based on ammonium sulphate and ammonium nitrate.

### Background Art

Nitrate-sulphate salts are known as double salts with two molecules of ammonium nitrate and one molecule of ammonium sulphate - 2NH₄NO_{3·}(NH₄)₂SO₄ - (2DA·SA in the following) and with three molecules of ammonium nitrate and one molecule of ammonium sulphate - 3NH₄NO₃·(NH4)₂SO₄ - (3DA·SA in the following). Their physical and physical-mechanical properties differ from those of ammonium nitrate and of ammonium sulphate. The difference consists mainly in that the double salts 2DA·SA and 3DA·SA do not undergo the characteristic phase transformations of ammonium nitrate, especially the phase transformation of phase III to phase IV of ammonium nitrate and vice versa. The double salts have lower solubility than ammonium nitrate and they dissolve incongruently (before they reach the melting point), they have higher hygroscopic point value and, therefore, these double salts are more stable against moisture absorption than ammonium nitrate (L. Jager, P. Hegner: Kvalita tuhých průmyslových hnojiv ("Quality of solid industrial fertilizers"); SNTL Praha; 1987). From the point of view of fertilizer application and more favourable effect of nutriments, granulated form of fertilizer made of the double salts can be used more advantageously.

From the physicochemical point of view, methods of preparation of nitrate-sulphate fertilizers may be systematically classified according to physical character of the slurry in processes based on the solution principle of slurry preparation and processes based on the melt principle of slurry preparation. In the solution principle of slurry preparation, usually slurry having a temperature between 60 and 120 °C and water content greater than 6 % by weight is used. In the melt principle of slurry preparation usually temperatures of 120 to 210 °C and water content lower than 6 % by weight are used. Differences in the procedures express the way, how the continuous phase is formed.

In case of solution formation of the slurry, the continuous phase is formed by a saturated solution of both salts, in which crystals of double salts 2DA·SA, 3 DA·SA and crystals of raw materials are dispersed.

In case of melt formation of the slurry, the continuous phase is formed by a melt of both salts of raw materials, in which the double salts and salts of raw materials are dispersed. The solution system creates better conditions for the formation and growth of the double salt crystals. During formation of granulate from the melt slurry and subsequent drying of granulate from melt, double salts crystallize from the melt and unreacted fractions of raw materials stay in the granulate. High temperature of forming and rapid cooling are the reason, why the raw materials do not react completely and a part of unreacted raw materials stays in the product, which is then, after some time of storage, subjected to recrystallization in the presence of moisture and this may lead to softening of granules or even to complete degradation of the granulate to powder in the extent corresponding to the amount of thermodynamically unstable salts in the system of compounds in the granules.

The problem occurring in both principles consists in the content and form of free ammonium nitrate. In the melt system, ammonium nitrate is present in the solidified melt; in the solution system, double salts dissolve incongruently and crystallization of ammonium nitrate takes place from saturated solution by evaporating water from the solution.

There are several patent documents dealing with preparation of nitrate-sulphate fertilizers. From the systemic point of view they can be classified in three groups.

The first group may include patented procedures based on the principle of preparation of an acidic charge consisting of a mixture of sulphuric acid and nitric acid; acidic charge consisting of a mixture of ammonium sulphate, sulphuric acid and nitric acid; acidic charge of a solution made of ammonium sulphate, ammonium hydrogen sulphate and ammonium nitrate. After this acidic charge has been prepared, this acidic mixture is treated with gaseous ammonia or ammonia liquor. After treating the acidic charge with ammonia a slurry forms which may be modified by adding a filling agent, for example ground limestone, dolomite, magnesite, calcium sulphate anhydride or hemihydrate, and the like, the slurry is further transformed into solid state, i.e. it is processed by granulation, pressing or crushing the solidified blocks. These techniques are described by the patents GB 798 690 (1958); BP 1 049 782 (1963); SU 1 511 251 (1989), and firm publications Victor Proces (1968) (Gewerkschaft Victor - Chemische Werke); Uhde - Hebernia Proces (1968) (Krupp - Uhde) and Tennessee Valley Authority (Fertilizer Manual, Kluwer Academic Publishers, p. 249; 1998). The advantages of methods of preparation of a nitrate-sulphate fertilizer included in this group are the relatively low temperatures of entering reactants, low energy intensity because of favourable and effective utilization of heat released in the course of treating the slurry with ammonia to thicken it. Suitably modified apparatus for the treatment with ammonia consists of special construction materials.

The second group may include techniques of preparation of a nitrate-sulphate fertilizer based on processing the melt formed by melting a mixture of the salts ammonium sulphate and ammonium nitrate. The process is conducted so that to an ammonium nitrate melt crystalline ammonium sulphate and further additives are added, modifying the content of nutriments and quality of the final product. A disadvantage of the technology is that relatively high temperatures (175 to 210 °C) are used to melt ammonium sulphate. At these temperatures practically complete melting of both components forming the double salt takes place. A disadvantage is that at the working temperature also decomposition of the reaction components and some of the additives occurs. Decomposition reactions of carbonate based additives bring about releasing of carbon dioxide and, therefore, they cause the granulate porosity and softness. Moreover, at these high temperatures decomposition of nitrates with accompanying formation of nitrogen oxides increase considerably. This causes loss of nitrogen in the final product. The melt method of preparation of a nitrate-sulphate fertilizer uses primarily prilling method of granulation (melt dripping through a screen or centrifuging the melt through perforated wall of a centrifuge), but drop solidification at prilling is sensitive to the mutual ratio of reactants. Technology of preparation of a nitrate-sulphate fertilizer is described, for example, in GB 1 005 166 (1965; BASF); USP 6 689 181 (2004); US Appl. 2002/0095966 A1.

Third group of preparations of a nitrate-sulphate fertilizer includes techniques based on preparation of an oversaturated solution of a mixture of ammonium nitrate and sulphate and its subsequent granulation to dry - dehydrated - recycled material. In the course of product preparation additives for modification of final quality of granulate are added during granulation or before pressing. In both cases the continuous phase in formation and solidification consists of a saturated solution of incongruently dissolving double salts 2DA·SA and 3DA·SA. In this group of methods for preparation of a nitrate-sulphate fertilizer, granulation is usually performed in a cylinder, plate or screw granulator. Technological procedures in this group are dealt with in the following patents: US 3 635 691 (1972); GB 1 259 778 (1972; Fisons Ltd.); BP 1 119 702 (1965); SU 151 12515 (1989); PL 85766 (1976); Victor Proces (1968; publ. Omnia Proces).

Documents BE400807, BE388046, GB1049782 and GB1071773 disclose the preparation of ammonium nitrate sulphate fertilizers from a solution slurry and further granulation.

### Disclosure of Invention

The present invention relates to a process of preparation of an ammonium nitrate sulphate fertilizer as described in claim 1.

The subject-matter of preparation of a nitrate-sulphate fertilizer from a solution slurry of ammonium nitrate-sulphate according to the present invention consists in that the solution slurry of ammonium nitrate-sulphate with crystal nuclei of the double salt with two molecules of ammonium nitrate and one molecule of ammonium sulphate, containing 6 to 15 % by weight of water, is prepared by continuous dosing ammonia treated melt of ammonium nitrate and the first part of ammonium sulphate under adding direct steam at a temperature of 60 to 120 °C, and maintaining the molar ratio ammonium nitrate : ammonium sulphate in the slurry in the range of 1.8 to 2.2 : 1. The resulting solution slurry with the corresponding water content is mixed with the second part of crystalline ammonium sulphate and return recycle at a moist granulate temperature of 65 to 110 °C with the molar ratio ammonium nitrate : ammonium sulphate lower than 2, and the moist granulate is dried by hot air at a granulate temperature of 50 to 125 °C. Subsequently, under permanent decrease of water content, the residual amount of free ammonium nitrate reacts completely, wherein dry granulate results, from which the production fraction of nitrate-sulphate fertilizer containing 22 to 29 % by weight of nitrogen and 5 to 15 % by weight of sulphur in the form of sulphates is obtained by sorting on a sieve. Moreover, undersize and oversize parts are obtained which are returned after crushing as recycle.

The divided dosing of ammonium sulphate ensures in the process of nitrate-sulphate fertilizer preparation steady excess of free ammonium sulphate and completing the reaction of ammonium nitrate under formation of double salts. Dissolution rate of crystalline ammonium sulphate, and thus the rate of double salts formation in the reaction slurry is increased by enlarging the surface of the crystalline ammonium sulphate used (for example by milling the coarse-grained fractions of ammonium sulphate crystals).

It has been found that it is advantageous, if the dosing of the first part of ammonium sulphate is performed at a temperature of 95 to 105 °C, when the resulting solution slurry contains 7.5 to 9.5 % by weight of water and the weight ratio of the recycle to the slurry is 2.5 to 4.5 :1. Preferably, 70 to 90 relative % of ammonium nitrate are converted to the double salt with two molecules of ammonium nitrate and one molecule of ammonium sulphate (2DA·SA).

The resulting slurry is mixed with the second part of crystalline ammonium sulphate in a granulator or - in case of using an equipment for the slurry stabilization - before the granulator.

To improve physical-mechanical properties of the fertilizer a neutral solution prepared by
decomposition of dolomite with concentrated nitric acid, in an amount of 3 to 7 % by weight is added to the solution slurry.

Continuous phase in the moist granulate is formed by virtually saturated solution of ammonium sulphate and of the rest components, from which double salts - crystal hydrates crystallize. To integrate the resulting granulate and to bind water, ferrous sulphate and/or solution of a mixture of calcium nitrate and magnesium nitrate and/or a mixture of calcium-ammonium sulphate and/or magnesium-ammonium sulphate and/or a mixture of calcium sulphate and magnesium sulphate are used.

According to the invention
0.1 to 0.3 % by weight of heptahydrate of ferrous sulphate is also added to the slurry.

A part of ammonium sulphate up to the molar ratio of ammonium nitrate : ammonium sulphate of 2 : 1 may be replaced by ground dolomite and/or ground magnesite and/or ground devitalized (deactivated) calcium sulphate anhydride - a fraction under 0.125 mm - which is added to the slurry or into the granulator.

Also carbonates, hydroxides and hydrated oxides, magnesium and calcium phosphates may be used as additives - filling agents - but also iron hydroxides, ferrihydrates, jarosite may be used. Also trace elements, for example in the form of nitrates or sulphates and/or oxides and/or hydroxides and/or phosphates, may be added to the solution or melt slurry, either alone or in combination with ground dolomite and/or ground calcium sulphate anhydride.

The ratio of nutriments nitrogen and sulphur in the fertilizer prepared by the method according to the present invention may be modified by adding dolomite, calcium sulphate anhydride or hemihydrate or possibly another inert substance together with adding ammonium sulphate and recycle into the granulator.

By the method of divided dosing raw materials according to the present invention a nitrate-sulphate fertilizer is prepared, by using which both nutriments - nitrogen and sulphur - are applied in a single step, and it is not necessary to mix mechanically granulated saltpetre and crystalline ammonium sulphate during application.

Granulated ammonium nitrate-sulphate fertilizer prepared by the method according to the present invention is suitable for example for the plants of mustard family, oilseed rape, sunflower, cereals and the like, where the presence of sulphur in the fertilizer increases oil and protein content in seeds, improves health condition of the crops and in all crops, where the fertilizer has been applied, utilizability of nutriments from the soil substrate by the crops is increased. Bulk fodders prepared from the plants, where the fertilizer prepared according to the present invention had been used, have a higher content of proteins and saccharides; they ensure sound formation of horn and yield higher strength of hair (wool).

### Examples of invention embodiments

### Example 1 (not belonging to the invention)

13.6 t/h of ammonia treated melt of ammonium nitrate having a concentration of 93 % by weight and a temperature of 145 °C and 13.65 t/h of crystalline ammonium sulphate with water content of 0.5 to 1.5 % by weight and mean particle size d₅₀ of about 0.20 mm were continuously fed into a reactor. While adding 1 to 2 t/h of direct steam with 0.6 MPa and under steady stirring at a temperature of 98 to 105 °C a solution slurry has been prepared with crystal nuclei of the double salt 2DA·SA.

This slurry with water content in the range of 7.5 to 9.5 % by weight was mixed in a granulator with a further portion of 7.35 t/h of crystalline ammonium sulphate and return recycle at a temperature of 75 °C. The recycle portion, given by the weight ratio of the recycle and slurry was ca 3.5 : 1. In the granulator, further crystallization of the double salt took place under formation of moist granulate. The moist granulate was dried by preheated air having a temperature of 150 °C in such a way that the temperature of the outgoing dry granulate did not exceed 80 °C. Dry granulate containing 0.4 to 0.6 % by weight of water was sorted using a sieve, wherein the undersize portion was combined with crushed oversized portion and they were returned together into the granulation process as the recycle. The sorted product fraction in an amount of 34.6 t/h was cooled to 25 °C, surface treated by anti-sintering and anti-dust surfactant, and subsequently the product was been dispatched.

The final product has contained 26 % by weight of overall nitrogen and 12.4 % by weight of sulphur in the form of sulphates. The static point strength of granules was 25 to 40 N per granule with a diameter of 4 to 5 mm.

### Example 2

### (not belonging to the invention)

In a reactor a slurry of ammonium nitrate and ammonium sulphate has been prepared as in Example 1 with the difference that the slurry has contained 6,5 % by weight of water. 2275 kg/h of aqueous equimolar solution of magnesium nitrate and calcium nitrate containing 50 % by weight of water, prepared by decomposition of dolomite with nitric acid, have been added to the slurry. 35.7 t/h of the product containing 25.7 % by weight of nitrogen, 14.6 % by weight of sulphur in the form of sulphates and 0.4 % by weight of magnesium oxide MgO, have been obtained.

The point strength of granules has been at least 50 N per granule with a diameter of 4 to 5 mm.

### Example 3

In a reactor a slurry has been prepared as in Examples 1 and 2 with the difference that the slurry has contained 13,5 % by weight of water. 70 kg/h of heptahydrate of ferrous sulphate have been further added to the slurry. Using a procedure as in Example1, 35.7 t/h of the product containing 25.7 % by weight of nitrogen and 14.6 % by weight of sulphur in the form of sulphates, 0.4 % by weight of magnesium oxide MgO, and ca 4000 ppm Fe, have been prepared.

The point strength of granules has been at least 50 N per granule with a diameter of 4 to 5 mm.

### Example 4

In a reactor a slurry containing 8 % by weight of water has been prepared by the procedure described in Examples 1, 3 and 4. Heptahydrate of zinc sulphate in an amount of 17.47 kg/h, tetrahydrate of ammonium molybdate in an amount of 2.3 kg/h and boric acid in an amount of 20.4 kg/h have been added to the slurry. 35.7 t/h of product containing 25.7 % by weight of nitrogen, 14.6 % by weight of sulphur in the form of sulphates, 0.08 % by weight of Zn, 0.005 % by weight of Mo and 0.1 % by weight of B have been obtained.

### Industrial applicability

Granulated ammonium nitrate-sulphate fertilizer prepared by the method according to the present invention can be utilized especially in agriculture.

## Claims

1. Process of preparation of an ammonium nitrate-sulphate fertilizer from a solution slurry of ammonium nitrate-sulphate,
**characterized in that**
the solution slurry of ammonium nitrate-sulphate with crystal nuclei of the double salt with two molecules of ammonium nitrate and one molecule of ammonium sulphate is prepared by continuous dosing of ammonia treated melt of ammonium nitrate and the first part of ammonium sulphate under adding direct steam at a temperature of 60 to 120 °C, maintaining the molar ratio ammonium nitrate : ammonium sulphate in the slurry in the range of 1.8 to 2.2 : 1, to the solution slurry neutral solution prepared by decomposition of dolomite with concentrated nitric acid is added in an amount of 3 to 7 % by weight and 0.1 to 0.3 % by weight of heptahydrate of ferrous sulphate, wherein the resulting solution slurry, containing 6.5 to 13.5 % by weight of water, is mixed with the second part of crystalline ammonium sulphate and return recycle at a temperature of the moist granulate of 65 to 110 °C with the molar ratio ammonium nitrate : ammonium sulphate lower than 2; the resulting moist granulate is dried by hot air at a granulate temperature of 50 to 125 °C, while under permanent decrease of water content the residual amount of free ammonium nitrate reacts completely under formation of dry granulate from which the production fraction of ammonium nitrate-sulphate fertilizer as well as undersize and oversize parts are obtained by sorting on a sieve, which portions are then returned after crushing them as a recycle.

2. Process according to claim 1,
**characterized in that**
dosing of the first part of ammonium sulphate is performed at a temperature of 95 to 105 °C.

3. Process according to claim 1,
**characterized in that**
the resulting slurry contains 7,5 to 9.5 % by weight of water.

4. Process according to claim 1,
**characterized in that**
70 to 90 relative % of ammonium nitrate is converted to the double salt with two molecules of ammonium nitrate and one molecule of ammonium sulphate.

5. Process according to claim 1,
**characterized in that**
the weight ratio of recycle to slurry is 2.5 to 4.5 : 1.

6. Process according to claim 1,
**characterized in that**
the resulting slurry is mixed with the second part of crystalline ammonium sulphate in a granulator.

7. Process according to claim 1,
**characterized in that**
the resulting slurry is stabilized and mixed with the second part of crystalline ammonium sulphate before the granulator.

8. Process according to claim 1,
**characterized in that**
the moist granulate is dried by hot air having a temperature of 150 °C at a granulate temperature of 70 to 80 °C.

9. Process according to claim 1,
**characterized in that**
the water content in the dry granulate is 0.4 to 0.6 % by weight.

10. Process according to claim 1,
**characterized in that**
a part of ammonium sulphate up to the molar ratio ammonium nitrate : ammonium sulphate of 2 : 1 is replaced with ground dolomite and/or ground magnesite and/or ground deactivated calcium sulphate anhydride with a fraction under 0.125 mm, which is added to the slurry or into the granulator.

11. Process according to claim 1,
**characterized in that**
to the solution or melt slurry trace elements are added in the form of nitrates or sulphates and/or oxides and/or hydroxides and/or phosphates.

12. Process according to claim 1,
**characterized in that**
to the solution or melt slurry trace elements are added in the form of nitrates or sulphates and/or oxides and/or hydroxides and/or phosphates in combination with ground dolomite and/or ground anhydride of calcium sulphate.

## Patentansprüche

1. Verfahren zur Herstellung eines granulierten, ammoniumnitrat-sulfathaltigen Düngemittels aus einer Lösungsaufschlämmung von Ammoniumnitratsulfat,
**dadurch gekennzeichnet, dass**
eine Lösungsaufschlämmung des Ammoniumnitratsulfats mit Kristallisationskernen des Doppelsalzes mit zwei Molekülen vom Ammoniumnitrat und einem Molekül vom Ammoniumsulfat durch kontinuierliche Dosierung einer mit Ammoniak alkalisierten Schmelze des Ammoniumnitrats und eines ersten Teils des Ammoniumsulfats unter Zugabe von Direktdampf bei einer Temperatur von 60 bis 120 °C hergestellt wird, wobei das Molverhältnis von Ammoniumnitrat zu Ammoniumsulfat in der Aufschlämmung im Bereich von 1,8 bis 2,2 : 1 gehalten wird, wobei der erhaltenen Lösungsaufschlämmung eine neutrale, durch Zersetzung vom Dolomit mit konzentrierter Salpetersäure hergestellte Lösung in einer Menge von 3-7 Gew.-% und 0,1 bis 0,3 Gew.-% von Eisensulfat-Heptahydrat zugegeben wird, wobei die erhaltene, 6,5 bis 13,5 Gew.-% Wasser beinhaltende Aufschlämmung mit einem zweiten Teil des kristallinen Ammoniumsulfats und mit dem rückgeführten Produkt gemischt wird, und bei einer Temperatur des feuchten Granulats von 65 bis 110 °C bei molaren Verhältnis von Ammoniumnitrat zu Ammoniumsulfat kleiner als 2 granuliert wird, das erhaltene feuchte Granulat durch Heißluft bei einer Granulattemperatur von 50 bis 125 °C getrocknet wird, während die Restmenge an freiem Ammoniumnitrat unter ständiger Abnahme des Wassergehalts zum Trockengranulat vollständig abreagiert, von dem durch Siebsortierung eine Produktionsfraktion des ammoniumnitrat-sulfathaltigen Düngers sowie Unterkorn- und Überkornanteil erhalten werden, die nach Zerkleinerung von Überkornanteil als rückgeführtes Produkt zurückgeführt werden.

2. Verfahren nach Anspruch 1,
**dadurch gekennzeichnet, dass**
die Dosierung von einem ersten Teil des Ammoniumsulfats bei einer Temperatur von 95 bis 105 °C durchgeführt wird.

3. Verfahren nach Anspruch 1,
**dadurch gekennzeichnet, dass**
die erhaltene Aufschlämmung zwischen 7,5 und 9,5 Gew.-% Wasser enthält.

4. Verfahren nach Anspruch 1,
**dadurch gekennzeichnet, dass**
von dem Ammoniumnitrat sich die Menge von 70 bis 90 Gew.-% zu einem Doppelsalz mit zwei Molekülen von Ammoniumnitrat und einem Molekül von Ammoniumsulfat umwandelt.

5. Verfahren nach Anspruch 1,
**dadurch gekennzeichnet, dass**
das Gewichtsverhältnis vom rückgeführten Produkt zur Aufschlämmung 2,5 bis 4,5 : 1 beträgt.

6. Verfahren nach Anspruch 1,
**dadurch gekennzeichnet, dass**
die erhaltene Aufschlämmung mit dem zweiten Teil vom kristallinen Ammoniumsulfat in einem Granulator gemischt wird.

7. Verfahren nach Anspruch 1,
**dadurch gekennzeichnet, dass**
die erhaltene Aufschlämmung stabilisiert wird und vor Granulierung mit dem zweiten Teil vom kristallinen Ammoniumsulfat gemischt wird.

8. Verfahren nach Anspruch 1,
**dadurch gekennzeichnet, dass**
das feuchte Granulat durch heißer Luft mit einer Temperatur von 150 °C bei einer Granulattemperatur von 70 bis 80 °C getrocknet wird.

9. Verfahren nach Anspruch 1,
**dadurch gekennzeichnet, dass**
der Wassergehalt im Trockengranulat zwischen 0,4 und 0,6 Gew.-%. beträgt.

10. Verfahren nach Anspruch 1,
**dadurch gekennzeichnet, dass**
ein Teil von Ammoniumsulfat bis zum Molverhältnis von Ammoniumnitrat: Ammoniumsulfat 2 : 1 durch gemahlenen Dolomit und/oder durch gemahlenen Magnesit und/oder durch gemahlenes desaktiviertes Calciumsulfat-Anhydrid mit einer Partikelgröße unter 0,125 mm ersetzt wird, die zu der Aufschlämmung oder in den Granulator gegeben werden.

11. Verfahren nach Anspruch 1,
**dadurch gekennzeichnet, dass**
zu der Lösungs- oder Schmelzaufschlämmung die Spurenelemente in Form von Nitraten oder Sulfaten und/oder Oxiden und/oder Hydroxiden und/oder Phosphaten zugegeben werden.

12. Verfahren nach Anspruch 1,
**dadurch gekennzeichnet, dass**
zu der Lösungs- oder Schmelzaufschlämmung die Spurenelemente in Form von Nitraten oder Sulfaten und/oder Oxiden und/oder Hydroxiden und/oder Phosphaten in Kombination mit gemahlenem Dolomit und/oder gemahlenem Calciumsulfat-Anhydrid zugegeben werden.

## Revendications

1. Procédé de préparation d'engrais granulaire à base de sulfate-nitrate d'ammonium à partir d'une suspension de sulfate-nitrate d'ammonium,
**caractérisé en ce que**
la suspension de sulfate et nitrate d'ammonium contenant noyaux de cristallisation de sel double avec deux molécules de nitrate d'ammonium et une molécule de sulfate d'ammonium est préparée par dosage continu d'une masse fondue ammoniacale de nitrate d'ammonium et la première partie de sulfate d'ammonium dans le réacteur avec addition de vapeur directe à une température comprise entre 65 et 110 °C en une quantité telle que le rapport molaire de nitrate d'ammonium : sulfate d'ammonium soit entre 1,8 et 2,2 : 1, une solution neutre préparée par la décomposition de la dolomite avec de l'acide nitrique concentré en une quantité de 3 à 7 % massique et 0,1 à 0,3 % massique de sulfate de fer heptahydraté est ajouté à la suspension et la suspension résultante contenant 6,5 à 13,5 % massique d'eau est mélangée avec une seconde portion de sulfate d'ammonium cristallin avec du produit recyclé et la suspension est granulée à une température de granulation par voie humide de 65 à 110 ° C avec un rapport molaire nitrate d'ammonium : sulfate d'ammonium inférieur à 2; les granulés humides résultants sont séchés à l'air chaud à une température de 50 à 125 ° C, tandis que nitrate d'ammonium libre résiduel réagit pendant la formation du granulat sec à partir duquel on obtient par tamisage une fraction de produit de l'engrais de sulfate-nitrate d'ammonium ainsi que les fractions de refus et de tamisat obtenues par tamisage qui sont repassées après écrasement de la partie de refus.

2. Procédé selon la revendication 1,
**caractérisé en ce que**
le dosage de la première partie de sulfate d'ammonium est effectuée à une température de 95 à 105 °C.

3. Procédé selon la revendication 1,
**caractérisé en ce que**
la suspension résultante contient 7,5 à 9,5 % massique d'eau.

4. Procédé selon la revendication 1,
**caractérisé en ce que**
70 à 90 % massique de nitrate d'ammonium sont transformés en un sel double avec deux molécules de nitrate d'ammonium et une molécule de sulfate d'ammonium.

5. Procédé selon la revendication 1,
**caractérisé en ce que**
le rapport massique de la partie recyclé et de la suspension est entre 2,5 et 4,5 : 1.

6. Procédé selon la revendication 1,
**caractérisé en ce que**
la suspension résultante est mélangée avec une seconde portion de sulfate d'ammonium cristallin dans le granulateur.

7. Procédé selon la revendication 1,
**caractérisé en ce que**
la suspension résultante est stabilisée et melangée avec une seconde portion de sulfate d'ammonium cristallin avant la granulation.

8. Procédé selon la revendication 1,
**caractérisé en ce que**
le granulat humide est séché avec de l'air chaud à 150 °C à une température de granulat comprise entre 70 et 80 °C.

9. Procédé selon la revendication 1,
**caractérisé en ce que**
la teneur en eau dans le granulat sec est de 0,4-0,6 % massique.

10. Procédé selon la revendication 1,
**caractérisé en ce que**
une portion de sulfate d'ammonium jusqu'à un rapport molaire de nitrate d'ammonium : sulfate d'ammonium 2: 1 est remplacée par de la dolomite broyée et/ou de la magnésite broyée et/ou du sulfate de calcium anhydre stabilisé broyé avec d'une fraction inférieure à 0,125 mm qui est ajouté à la suspension ou dans le granulateur.

11. Procédé selon la revendication 1,
**caractérisé en ce que**
des éléments-traces sous forme de nitrates ou de sulfates et/ou d'oxydes et/ou d'hydroxydes et/ou de phosphates sont ajoutés à la suspension ou à la masse fondue.

12. Procédé selon la revendication 1,
**caractérisé en ce que**
des éléments-traces sous forme de nitrates ou de sulfates et/ou d'oxydes et/ou d'hydroxydes et/ou de phosphates sont ajoutés à la suspension ou à la masse fondue en combinaison avec de la dolomite moulue et/ou de l'anhydride de sulfate de calcium broyé.
